# EUROPÄISCHE PATENTSCHRIFT

(11) **EP 3 361 918 B1**
(45) Veröffentlichungstag und Bekanntmachung des Hinweises auf die Patenterteilung: **10.06.2020**
(21) Anmeldenummer: 16778346.3
(22) Anmeldetag: 06.10.2016
(51) Int. Cl.: A47J 31/44

(54) **VORRICHTUNG UND VERFAHREN ZUM ERHITZEN UND AUFSCHÄUMEN EINER FLÜSSIGKEIT, INSBESONDERE EINES GETRÄNKS**
DEVICE AND METHOD FOR HEATING AND FOAMING A LIQUID, IN PARTICULAR A BEVERAGE
DISPOSITIF ET PROCÉDÉ DE CHAUFFAGE ET DE MOUSSAGE D'UN LIQUIDE, EN PARTICULIER D'UNE BOISSON

(30) Priorität: 16.10.2015 DE 102015117650; 23.02.2016 EP 16156809
(43) Veröffentlichungstag der Anmeldung: 22.08.2018
(73) Patentinhaber: Eversys Holding SA, 1957 Ardon (CH)
(72) Erfinder: LOCHER, Grégoire, 1976 Daillon (CH); BETRISEY, Stéphane, 1906 Charrat (CH)
(74) Vertreter: Charrier Rapp & Liebau
(86) Internationale Anmeldenummer: PCT/EP2016/073867
(87) Internationale Veröffentlichungsnummer: WO 2017/063936

(56) Entgegenhaltungen:
- EP-A1- 1 501 398
- EP-A1- 1 949 829
- EP-A1- 2 627 227
- DE-A1-102011 077 776
- US-B2- 7 600 467

## Beschreibung

Die Erfindung betrifft eine Vorrichtung zum Erhitzen und Aufschäumen einer Flüssigkeit, insbesondere eines Getränks. Die Erfindung betrifft weiterhin ein Verfahren zum Erhitzen und Aufschäumen einer Flüssigkeit. Die Vorrichtung und das Verfahren können insbesondere zum Erhitzen und Aufschäumen von Milch verwendet werden, beispielsweise für die Herstellung von milchhaltigen Heißgetränken, wie z.B. Cappuccino, Latte Macchiato, oder Kakaogetränken.

Eine Vorrichtung zum Erhitzen und Aufschäumen eines Getränkeprodukts, insbesondere Milch, ist aus der DE 10 2011 077 776 A1 bekannt. Diese Vorrichtung umfasst einen Dampferzeuger, eine Druckluftquelle mit einer Luftzuleitung zum Zuleiten von Druckluft von der Druckluftquelle zum Dampferzeuger und eine mit dem Dampferzeuger verbundene Dampf-/Luftleitung zum Zuleiten eines Dampf-/Luftgemischs vom Dampferzeuger in das Getränkeprodukt. An der Luftzuleitung und/oder der Dampf-/Luftleitung ist (jeweils) ein Absperrelement, beispielsweise in Form eines Ventils, vorgesehen. Die Vorrichtung ermöglicht ein verbessertes Aufschäumen des Getränkeprodukts, indem die Druckluft direkt von der Druckluftquelle in den Dampferzeuger geführt wird. Dadurch wird bereits im Dampferzeuger ein erhitztes Dampf-/Luftgemisch bereitgestellt, wodurch eine Kondensation von Flüssigkeit in der Dampfleitung reduziert werden kann. Durch Öffnen und Schließen der Absperrelemente in der Luftzuleitung bzw. der Dampf-/Luftleitung kann der Luftstrom bzw. der Strom des Dampf-/Luftgemisches in das Getränkeprodukt gesteuert und geregelt werden.

Eine weitere Vorrichtung zum Erhitzen und Aufschäumen von Milch, insbesondere zum Zubereiten von Cappuccino in einer Kaffeemaschine, ist in der EP 1 501 398 A1 beschrieben. Diese Vorrichtung umfasst einen dampferzeugenden Heißwasserbereiter, ein Fördermittel mit einem offenen Ende, welches in ein Milch enthaltendes Gefäß getaucht werden kann, eine Dampfleitung zum Zuführen von Dampf, welche zwischen dem Heißwasserbereiter und dem Fördermittel geschaltet ist, ein Absperrelement, eine Druckluftquelle, eine zwischen der Druckluftquelle und dem Fördermittel geschaltete Druckluftleitung zur Zuführung von Druckluft in das Fördermittel, einen Temperatursensor, der mit dem in die Milch eintauchbaren Ende des Fördermittels verbunden ist, um die Temperatur der Milch in dem Gefäß zu erfassen, sowie eine Steuereinheit, die mit dem Absperrelement, der Druckluftquelle und dem Temperatursensor gekoppelt und so programmiert ist, dass ein Öffnen und Schließen des Absperrelements und die Betätigung der Druckluftquelle unabhängig voneinander und entsprechend der gewünschten Temperatur und/oder der Aufschäumung der Milch gesteuert werden kann. Dadurch kann die Milch auf eine benötigte Temperatur erhitzt werden und mit einem vorgegebenen Schaum-/Flüssigkeits-Verhältnis aufgeschäumt werden. Das Schaum-/Flüssigkeits-Verhältnis der aufgeschäumten Milch kann dadurch in gewissem Umfang den Bedürfnissen angepasst werden.

Die US 7600467 B2 offenbart eine Vorrichtung zum Aufschäumen von Milch, in der ein Dampf-Luftgemisch in die Milch eingeleitet wird, wobei die Vorrichtung eine Mischkammer, eine mit der Mischkammer in Verbindung stehende Dampfquelle, ein mit der Mischkammer in Verbindung stehendes Milchreservoir, eine Pumpe zur Überführung der Milch aus dem Milchreservoir in die Mischkammer und eine mit der Mischkammer über eine Luftleitung in Verbindung stehende Druckluftquelle sowie eine zentrale Steuereinrichtung umfasst, wobei zur Erzeugung eines Dampf-Luftgemischs entweder ein kontinuierlicher Luftstrom durch Öffnen eines Magnetventils in der Luftleitung oder eine Serie von Druckpulsen von kontrollierter Dauer bereit gestellt werden kann. Der Luftstrom wird dabei in der Mischkammer mit einem Dampfstrom vermischt, der von der Dampfquelle in die Mischkammer geleitet wird.

Die bekannten Vorrichtungen zum Erhitzen und Aufschäumen von Getränken, insbesondere von Milchgetränken, ermöglichen zwar ein automatisches Erhitzen und Aufschäumen des Getränks unter Einhaltung einer vorgegebenen Getränketemperatur. Allerdings ist die Vorgabe bzw. Erzeugung einer gewünschten Konsistenz des aufgeschäumten Getränks und insbesondere eines vorgegebenen Schaum/Flüssigkeits-Verhältnis des erzeugten Schaums nur bedingt möglich. Zur Erzeugung einer gewünschten Konsistenz mit einem vorgegebenen Verhältnis des Schaums zur Flüssigkeit des aufgeschäumten Getränks sind in der Steuereinheit der bekannten Vorrichtungen vorgegebene Steuerprogramme einprogrammiert, so dass ein Bediener eine gewünschte Schaumtemperatur und -konsistenz durch Auswahl eines der Steuerprogramme vorgeben kann, woraufhin eine automatisierte Steuerung der Vorrichtung entsprechend dem ausgewählten Steuerprogramm erfolgt. Dies gewährleistet zwar einerseits einen vollautomatisierten Ablauf. Andererseits kann ein Bediener nicht mehr in den Ablauf eingreifen, was beispielsweise notwendig wird, wenn sich schon während des Aufschäumens zeigt, dass die gewünschte Schaumkonsistenz nicht erzielt werden kann. Darüber hinaus ist der Bediener an die vorprogrammierten Steuerprogramme gebunden und kann keine individuelle Zusammensetzung der aufgeschäumten Flüssigkeit in Bezug auf ihre Temperatur und Schaumkonsistenz sowie weitere Eigenschaften des Schaums erzeugen.

Es ist jedoch bekannt, dass die Schaumbildungseigenschaften von Milch neben der Aufschäumtemperatur auch ganz wesentlich von den Eigenschaften der verwendeten Milch abhängen, wie z.B. vom Fettgehalt, von der der Pasteurisierung bzw. der thermischen Vorbehandlung (Kurzzeit-, Hoch- oder Ultrahocherhitzung), dem pH-Wert, dem Proteingehalt und der Lagerungszeit, wie bspw. in der Dissertation von Katja Borcherding, Universität Kiel, "Untersuchungen zur Charakterisierung der Makro- und Mikrostruktur von Milchschäumen " (November 2004) beschrieben. Es ergibt sich daher ein Bedürfnis, die bekannten Vorrichtungen zum Erhitzen und Aufschäumen von Milch dahin gehend zu verbessern, dass sich Flüssigkeitsschäume und insbesondere Milchschäume mit einer individuell gewünschten und unterschiedlichen Konsistenz und Standhaftigkeit herstellen lassen.

Hiervon ausgehend liegt der Erfindung die Aufgabe zugrunde, eine Vorrichtung und ein Verfahren zum Erhitzen und Aufschäumen einer Flüssigkeit aufzuzeigen, mit denen der Bediener eine größere Flexibilität in Bezug auf die Eigenschaften des gebildeten Schaums wie z.B. seine Konsistenz, Cremigkeit, Porosität, Schaumdichte, und Schaumstabilität (Drainage) hat.

Diese Aufgabe wird mit einer Vorrichtung mit den Merkmalen des Anspruchs 1 sowie einem Verfahren mit den Merkmalen des Anspruchs 15 gelöst. Bevorzugte Ausführungsformen der Vorrichtung und des Verfahrens sind den abhängigen Ansprüchen zu entnehmen.

Die erfindungsgemäße Vorrichtung zum Erhitzen und Aufschäumen einer Flüssigkeit umfasst einen Dampferzeuger, eine Druckgasquelle und ein mit dem Dampferzeuger und der Druckgasquelle in Verbindung stehendes Fördermittel zur Überführung eines Dampf-/Gasgemischs in die Flüssigkeit. Zur Überführung des Dampfs von dem Dampferzeuger in das Fördermittel ist das Fördermittel zweckmäßig über eine Dampfleitung mit dem Dampferzeuger verbunden. Entsprechend ist das Fördermittel zweckmäßig über eine Druckgasleitung mit der Druckgasquelle verbunden, um das Fördermittel mit Druckgas zu beaufschlagen. Gemäß der Erfindung umfasst die Druckgasquelle ein steuerbares Schaltventil, mit dem Druckpulse (p) erzeugt werden, welche periodisch über die Druckgasleitung in das Fördermittel eingeleitet werden. Neben dem steuerbaren Schaltventil umfasst die Druckgasquelle einen Kompressor, der ein Druckgas (insbesondere Druckluft) durch Kompression eines Gases (insbesondere Luft) erzeugt und über eine Leitung dem Schaltventil zuführt. Das steuerbare Schaltventil wird dabei so angesteuert, dass es sich abwechselnd, bevorzugt periodisch, öffnet und schließt, um die Druckpulse zu erzeugen.

Die Parameter der auf diese Weise von der Druckgasquelle erzeugten Druckpulse, wie Amplitude, Pulsdauer und Wiederholrate (Pulsfrequenz), können dabei zweckmäßig verändert und von einem Bediener an der Vorrichtung, beispielsweise mittels Schalt- oder Drehknöpfen, eingestellt werden. Durch das Einleiten von Dampf und der Druckpulse von komprimiertem Gas wird in dem Fördermittel ein Dampf-/Gasgemisch erzeugt und über das Fördermittel in die Flüssigkeit geleitet, wodurch die Flüssigkeit erhitzt und aufgeschäumt wird. Die Konsistenz des dabei erzeugten Schaums, insbesondere das Verhältnis von Schaum zu Flüssigkeit, sowie weitere Parameter des Schaums wie z.B. seine Cremigkeit, Porosität, Schaumdichte und die Schaumstabilität (Drainage), sind dabei von den ausgewählten Parametern der Druckpulse des komprimierten Gases abhängig und können dadurch durch Auswählen geeigneter Parameter der Druckpulse beeinflusst werden. Ein Bediener kann deshalb durch Änderung der Parameter der Druckpulse vor und auch noch während des Aufschäumvorgangs die Eigenschaften des Schaums beeinflussen. So kann beispielsweise auch noch während des Aufschäumvorgangs die Wiederholrate (Pulsfrequenz) der periodisch in das Fördermittel eingeleiteten Druckpulse verändert werden. Durch eine Änderung der Pulsfrequenz der Druckpulse wird die Konsistenz des in der Flüssigkeit erzeugten Schaums beeinflusst. Auf diese Weise ist es beispielsweise möglich, über einen an der Vorrichtung vorgesehenen Drehregler die Pulsfrequenz stufenlos zwischen einem Minimalwert und einem Maximalwert einzustellen und dadurch die Konsistenz des erzeugten Schaums in vorgegebenen Grenzen zwischen fein und grob auszuwählen. Auf diese Weise wird es mit der erfindungsgemäßen Vorrichtung und dem erfindungsgemäßen Verfahren möglich, einen Schaum beliebiger Konsistenz zu erzeugen, wobei auch noch während des Aufschäumvorgangs (in gewissem Umfang) die erzeugte Schaumkonsistenz angepasst werden kann.

In einem zweckmäßigen Ausführungsbeispiel umfasst die Druckgasquelle zur Erzeugung der Druckpulse einen Kompressor, beispielsweise einen Hubkolbenverdichter, sowie ein als Magnetventil ausgebildetes Schaltventil. Das Magnetventil ist in der Druckgasquelle stromabwärts des Kompressors angeordnet. Der Kompressor stellt dabei permanent komprimiertes Gas (Druckgas) bereit und beaufschlagt die Druckgasleitung mit diesem Druckgas. Das Magnetventil wird zur Erzeugung der Druckpulse abwechselnd und bevorzugt periodisch geöffnet und geschlossen, so dass dem Fördermittel über die Druckgasleitung periodisch Druckpulse zugeleitet werden. Das steuerbare Magnetventil wird hierfür zweckmäßig von einer Steuereinrichtung angesteuert. Insbesondere kann das Magnetventil von der Steuereinrichtung pulsweitenmoduliert angesteuert werden, um das Magnetventil periodisch mit einer vorgegebenen Wiederholrate (Pulsfrequenz) zu öffnen und zu schließen. Dabei ist es auch möglich, unterschiedliche Öffhungs- und Schließzeiten für das Magnetventil vorzugeben. Die vorgegebenen Öffhungs- oder Schließzeiten für das Magnetventil definieren dabei die Pulsdauer der Druckpulse. Die Amplitude der in das Fördermittel eingespeisten Druckpulse ergibt sich aus dem (vorgegebenen und zweckmäßig einstellbaren) Druck, der permanent in der Druckgasquelle von dem Kompressor erzeugt wird, und dem Druckabfall entlang des Strömungspfades bis zur Verbindung der Druckgasleitung mit dem Fördermittel.

Das Schaltventil (Magnetventil) kann in der Druckgasquelle seriell an deren Ausgang angeordnet sein, so dass es beim Öffnen und Schließen den Strömungspfad von dem Kompressor zu der Druckgasleitung freigibt bzw. unterbricht und hierdurch einen Druckanstieg bzw. Druckabfall in der am Ausgang der Druckgasquelle angeschlossenen Druckgasleitung bewirkt. In diesem Fall definiert die Öffnungszeit des Schaltventils die Pulsdauer eines Druckpulses. Alternativ kann am Ausgang der Druckgasquelle eine Leitungsverzweigung vorgesehen sein, von der aus das Schaltventil in die Umgebung führt. In diesem Fall wird beim Öffnen und Schließen der Strömungspfad von dem Kompressor zu der Druckgasleitung mit der Umgebung verbunden bzw. von dieser getrennt und hierdurch ein Druckabfall bzw. Druckanstieg in der am Ausgang der Druckgasquelle angeschlossenen Druckgasleitung bewirkt. In diesem Fall definiert die Schließzeit des Schaltventils die Pulsdauer eines Druckpulses.

Die Wiederholrate (Pulsfrequenz) der zweckmäßig periodisch von der Druckgasquelle ausgegebenen Druckpulse liegt zweckmäßig im Bereich von 0,1 bis 200 Hz und bevorzugt zwischen 1 und 50 Hz. Neben der Pulsfrequenz ist bevorzugt auch die Pulsdauer und/oder die Amplitude der von der Druckgasquelle erzeugten Druckpulse einstellbar. Zum Einstellen einer gewünschten Pulsfrequenz, Pulsdauer und Pulsamplitude weist die Vorrichtung zweckmäßig eine geeignete Eingabeeinrichtung mit Tastschaltern oder Drehreglern auf, über welche die gewünschten Parameter der Druckpulse von einem Bediener eingegeben und von der Steuereinrichtung entsprechend eingestellt werden können. Insbesondere für die Einstellung der Pulsfrequenz ist zweckmäßig ein Drehregler vorgesehen, der bevorzugt stufenlos zwischen einer Minimalstellung und einer Maximalstellung einstellbar ist, um die Wiederholrate (Pulsfrequenz) der Druckpulse zwischen einem Minimalwert und einem Maximalwert (stufenlos) einstellen zu können. Ein Bediener kann mit diesem Drehregler bspw. zu Beginn des Aufschäumvorgangs eine gewünschte Konsistenz für den Schaum auswählen und über den Drehregler einstellen. Die vorgenommene Einstellung kann dabei zweckmäßig noch während des Aufschäumvorgangs geändert und insbesondere nachgeregelt werden, um eine an die individuellen Bedürfnisse angepasste Schaumqualität und -konsistenz zu erzeugen.

Um eine gewünschte Temperatur der Flüssigkeit beim Aufschäumen einzuhalten, umfasst die Vorrichtung zweckmäßig einen Temperatursensor zur Erfassung der Temperatur der Flüssigkeit bzw. des erzeugten Flüssigkeitsschaums. Der Temperatursensor ist dabei mit der Steuereinrichtung gekoppelt. Weiterhin ist zweckmäßig in der Dampfleitung ein Dampfventil vorgesehen, welches ebenfalls mit der Steuereinrichtung gekoppelt ist und von dieser geöffnet und geschlossen werden kann. Sobald der Temperatursensor eine vom Bediener vorgegebene Produkttemperatur (Temperatur der Flüssigkeit bzw. des Flüssigkeitsschaums) erfasst, wird das Dampfventil in der Dampfleitung geschlossen und gleichzeitig die Einleitung der Druckpulse in das Fördermittel gestoppt. Hierfür wird das gegebenenfalls von der Druckgasquelle umfasste Schaltventil geschlossen und/oder der Kompressor der Druckgasquelle abgeschaltet.

Um zu verhindern, dass Dampf oder Flüssigkeit in die Druckgasquelle gelangt, ist zweckmäßig in der Druckgasleitung ein Rückschlagventil angeordnet, welches lediglich den Durchtritt von Druckgas von der Druckgasquelle in das Fördermittel zulässt, jedoch das Durchströmen von Dampf in entgegengesetzter Richtung verhindert.

Da der Druck des von der Druckgasleitung in das Fördermittel abgegebenen Gases bei gegebener Kompressorleistung vom Strömungswiderstand des von dem Kompressor zu dem Fördermittel führenden Strömungspfades abhängt, ist es zweckmäßig, in der Druckgasleitung ein Drosselventil vorzusehen um diesen Strömungswiderstand definiert einzustellen. Im einfachsten Fall kann ein Drosselventil mit festem Strömungswiderstand vorgesehen sein. Ein Drosselventil mit regelbarem Strömungswiderstand bietet einen zusätzlichen Freiheitsgrad zur Einstellung des Drucks des in das Fördermittel abgegebenen Gases.

Gemäß der Erfindung sind die Druckpulse mit einem Druck-Offset versehen, d.h. mit einem permanenten Grunddruck, der größer als der Luftdruck der Umgebung ist. Während der Zeiten (Perioden), in denen das steuerbare Schaltventil der Druckgasquelle geschlossen ist, leitet die Druckgasquelle dabei ein Druckgas in die Druckgasleitung ein, dessen Druck dem offset-Druck- entspricht. Der Druck-Offset kann bspw. durch Ausbildung des Schaltventils als steuerbares Drosselventil erzeugt werden, wobei das Schaltventil in den Zeiten, in denen die Druckgasquelle ein Druckgas mit einem vorgegebenen Offset-Druck ausgibt, nicht vollständig geschlossen wird, so dass das von dem Kompressor der Druckgasquelle erzeugte Druckgas mit vermindertem Druck durch das Drosselventil strömen und dadurch den Druck-Offset erzeugen kann. Wird das Schaltventil im nachfolgenden Zyklus (bzw. der nachfolgenden Periode der Druckpulse) vollständig geöffnet, kann das Druckgas mit dem vollen vom Kompressor erzeugten Druck durch das Schaltventil strömen und bildet dadurch einen Druckpuls aus, der eine über dem Offset-Druck liegende Druckamplitude aufweist.

Der zeitliche Druckverlauf des von der Druckgasquelle in die Druckgasleitung geleiteten Druckgases kann dabei streng periodisch mit einer vorgegebenen Frequenz bzw. Periodendauer und insbesondere rechteckförmig oder sinusförmig sein. Es ist jedoch auch möglich, die Druckpulse aperiodisch zu erzeugen und in die Druckgasleitung einzuleiten.

Diese und weitere Merkmale und Vorteile der Erfindung ergeben sich aus den nachfolgend unter Bezugnahme auf die begleitenden Zeichnungen näher beschriebenen Ausführungsbeispielen. Die Zeichnungen zeigen:
- **Fig. 1**: eine erste Ausführungsform der Erfindung mit einer Steuerung des von der Druckgasquelle abgegebenen Drucks durch ein Schaltventil,
- **Fig. 2**: eine zweite Ausführungsform der Erfindung mit einer Steuerung des von der Druckgasquelle abgegebenen Drucks durch ein Schaltventil;
- **Fig. 3**: eine dritte Ausführungsform der Erfindung mit einer Erhitzereinheit zur Erzeugung eines Dampf-/Gasgemisches;
- **Fig. 4**: eine Detaildarstellung der Erhitzereinheit der Vorrichtung von Figur 3 in einem Längsschnitt (Figur 4a) und einem Querschnitt durch die Ebene B-B (Figur 4b);
- **Fig. 5**: den zeitlichen Verlauf des von der Druckgasquelle abgegebenen Drucks.

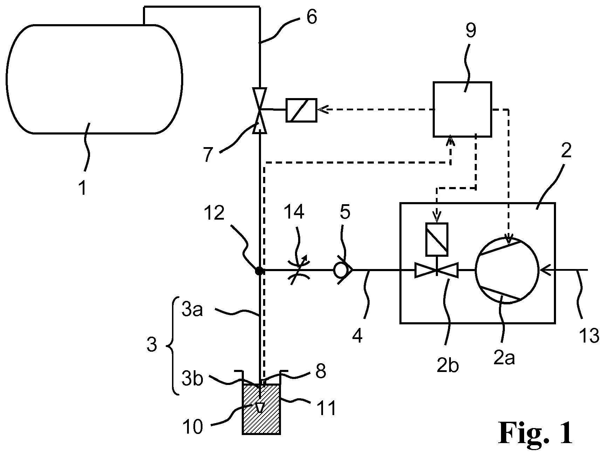

Wie aus Fig. 1 zu ersehen ist, umfasst eine erste Ausführungsform einer erfindungsgemäßen Vorrichtung einen Dampferzeuger 1, eine von diesem ausgehende Dampfleitung 6, eine Druckgasquelle 2, eine von dieser ausgehende Druckgasleitung 4, ein Fördermittel 3 in Form eines Förderrohres 3a und eine an dessen Ende angeordnete Düse 3b zur Überführung eines Dampf-Gas-Gemischs in eine aufzuschäumende Flüssigkeit 10. Bei der Flüssigkeit 10, die sich in einem Behälter 11 befindet, kann es sich insbesondere um ein Getränk wie Milch oder ein milchhaltiges Getränk handeln. Zum Aufschäumen der Flüssigkeit 10 wird das offene Ende des Förderrohres 3a, welches mit der Düse 3b ausgestattet ist, in die Flüssigkeit 10 eingetaucht. Über die Dampfleitung 6 wird dem Fördermittel 3 in dem Dampferzeuger 1 erzeugter Dampf zugeführt und über die Druckgasleitung 4 wird ein in der Druckgasquelle 2 komprimiertes Gas in das Fördermittel 3 eingeleitet, so dass dort ein Dampf-Gas-Gemisch entsteht, welches über das Förderrohr 3a in die Flüssigkeit 10 eingeleitet wird.

Die Dampfleitung 6 und die Druckgasleitung 4 sind an einer Leitungsverzweigung 12, von der aus sich das Förderrohr 3a in Richtung der Düse 3b erstreckt, miteinander verbunden. Die Druckgasquelle 2 umfasst einen Kompressor 2a und ein elektrisch steuerbares Schaltventil in Form eines Magnetventils 2b zwischen dem Kompressor 2a und der vom Ausgang der Druckgasquelle 2 zu der Leitungsverzweigung 12 führenden Druckgasleitung 4. Dem Kompressor 2a wird über eine Gaszufuhrleitung 13 Gas bei niedrigem Druck zugeführt. Der Kompressor 2a verdichtet das zugeführte Gas und gibt es mit erhöhtem Druck über die Druckgasleitung 4 ab. Bei dem Gas handelt es sich zweckmäßig um Luft, es kann sich jedoch auch um andere Gase wie Kohlendioxid (CO₂) oder Stickstoff (N₂) oder um Gasgemische handeln. Vorzugsweise wird von dem Kompressor 2a über die Gaszufuhrleitung 13 Luft aus der Umgebung angesaugt.

In der Druckgasleitung 4 sind zwischen der Druckgasquelle 2 und der Leitungsverzweigung 12 ein Rückschlagventil 5 und ein Drosselventil 14 angeordnet. Das Rückschlagventil 5 verhindert im Fall eines Druckabfalls in der Druckgasleitung 4 den Eintritt von Dampf aus der Dampfleitung 6 oder von Flüssigkeit 10 aus dem Behälter 11 in die Druckgasquelle 2. Das zweckmäßig zwischen dem Rückschlagventil 5 und der Leitungsverzweigung 12 angeordnete Drosselventil 14 sorgt dafür, dass durch den Kompressor 2a in dem Abschnitt der Druckgasleitung 4 zwischen dem Kompressor 2a und dem Drosselventil 14 ein definierter Druck aufgebaut wird. Das Drosselventil 14 kann im einfachsten Fall einen festen Strömungswiderstand haben. Es kann jedoch auch regelbar ausgebildet sein, damit sein Strömungswiderstand auf einen gewünschten Wert eingestellt und bei Bedarf verändert werden kann.

In der Dampfleitung 6 ist zwischen dem Dampferzeuger 1 und der Leitungsverzweigung 12 ein elektrisch steuerbares Dampfventil 7 angeordnet, welches ebenfalls in Form eines Magnetventils ausgebildet sein kann. Das Dampfventil 7, das Magnetventil 2b und der Kompressor 2a werden von einer elektronischen Steuereinrichtung 9, mit der sie über entsprechende Steuerleitungen verbunden sind, gesteuert. Die Steuereinrichtung 9 enthält eine Mensch-Maschine-Schnittstelle in Form von Tasten, Drehknöpfen und eines Bildschirms, der auch berührungsempfindlich sein kann, zur Kommunikation mit einem Benutzer. Der Benutzer kann über die Schnittstelle Steueranweisungen eingeben und angezeigte Betriebszustände und Fehlermeldungen auslesen.

An dem in die Flüssigkeit eingetauchten offenen Ende des Fördermittels 3 und zweckmäßig an der Düse 3b ist ein Temperatursensor 8 angebracht, welcher die Temperatur der Flüssigkeit 10 erfasst und über eine Messleitung an die Steuereinrichtung 9 überträgt. Nicht dargestellt sind in Fig. 1 eine weitere Steuerleitung, die von der Steuereinrichtung 9 zu dem ebenfalls von dieser gesteuerten Dampferzeuger 1 führt, sowie eine Steuerleitung, die beim Einsatz eines regelbaren Drosselventils 14 von der Steuereinrichtung 9 zu dem Drosselventil 14 führt.

Zum Betrieb der erfindungsgemäßen Vorrichtung wird nach Inbetriebnahme des Dampferzeugers 1 das Dampfventil 7 von der Steuereinrichtung 9 in die offene Stellung versetzt und gleichzeitig die Druckgasquelle 2 aktiviert. Der von dem Dampferzeuger 1 erzeugte Dampf gelangt durch die Dampfleitung 6 zu der Leitungsverzweigung 12. Dort vermischt er sich mit der Druckluft, welche von dem Kompressor 2a ausgehend durch das von der Steuereinrichtung 9 gesteuerte Magnetventil 2b und die Druckgasleitung 4 durch das Rückschlagventil 5 und das Drosselventil 14 hindurch ebenfalls zu der Leitungsverzweigung 12 gelangt. Von dieser strömt das Dampf-Luft-Gemisch dann durch das Förderrohr 3a zu der Düse 3b, wo es in die Flüssigkeit 10 eintritt und diese aufschäumt.

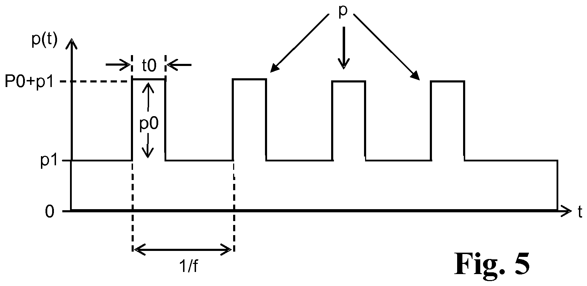

Hierbei wird das Magnetventil 2b von der Steuereinrichtung 9 vom gleichen Zeitpunkt ab, zu dem das Dampfventil 7 geöffnet wird, so angesteuert, dass es fortlaufend periodisch öffnet und schließt, so dass der Druck in der Druckgasleitung 4 einen zeitlich wechselnden Verlauf hat, wie er schematisch in Fig. 5 dargestellt ist. Es wird eine Folge von einzelnen Druckpulsen p abgegeben, die eine vorbestimmte Amplitude p0, Pulsdauer t0 und Frequenz f bzw. Periodendauer 1/f haben. Hierbei ist die Amplitude p0 durch den von dem Kompressor 2a abgegebenen Druck und die Wirkung des Drosselventils 14 vorgegeben. Zur Einstellung einer gewünschten Amplitude p0 wird der Kompressor 2a durch die Steuereinrichtung 9 entsprechend den Eingaben des Benutzers angesteuert. Falls das Drosselventil 14 regelbar ist, bietet dieses einen weiteren Freiheitsgrad zu Einstellung der Amplitude p0. Zwischen zwei aufeinander folgenden Druckpulsen ist der Druck in dem Betriebsmodus, der in dem Diagramm der Figur 5 gezeigt ist, Null, d.h. die Druckgasquelle 2 gibt kein unter Druck stehendes Gas ab, weil das Schaltventil 2b vollständig geschlossen ist.

In dem der Erfindung entsprechenden Betriebsmodus , der in dem Diagramm der Figur 5 schematisch durch den zeitlichen Druckverlauf der Druckpulse dargestellt ist, ist ein Druck-Offset p1 vorgesehen, der dauernd an der Druckgasleitung 4 anliegt, d.h. die Druckgasquelle 2 erzeugt permanent ein Druckgas mit einer vorgegebenen Druckamplitude in Höhe des Druck-Offsets p1. Auf diesen Druck-Offset p1 werden die zweckmäßig periodisch erzeugten Druckpulse mit einer Pulsamplitude p0 aufgesetzt, wie schematisch in Figur 5 gezeigt. Während die Druckpulse erzeugt werden, gibt die Druckgasquelle dann einen Druckpuls des komprimierten Gases mit einer Gesamtdruckamplitude von p0 + p1 aus. Der Druck-Offset p1 kann dabei bspw. dadurch erzeugt werden, dass das Schaltventil 2b nicht vollständig geschlossen wird, sondern auch zwischen zwei aufeinander folgenden Druckpulsen leicht geöffnet ist, so dass das vom Kompressor 2a erzeugte Druckgas (unter Drosselung des Drucks) in die Druckgasleitung 4 einströmen kann. Das Schaltventil 2a wird bei diesem Betriebsmodus als Drosselventil bzw. Stromregelventil betrieben. Die Druckamplitude des Druck-Offsets p1 wird dabei durch die Öffnungsstellung des Schaltventils 2b bestimmt.

Der Druck-Offset p1 kann alternativ auch durch einen Bypass in der Druckgasleitung 4 erzeugt werden, der das Schaltventil 2b umgeht und ein zweckmäßig regelbares Drosselventil enthält, mit dem der Strömungsquerschnitt im Bypass reduziert wird und zweckmäßig einstellbar ist.

Die Pulsdauer t0 und die Pulsfrequenz f werden von der Steuereinrichtung 9 entsprechend den Eingaben des Benutzers durch eine Ansteuerung des Magnetventils 2b eingestellt, und zwar unabhängig voneinander, so dass auch der Tastgrad, d.h. das Verhältnis der Pulsdauer t0 zur Periodendauer 1/f variiert werden kann. Insgesamt stehen somit vier Parameter zur Verfügung, nämlich, die Frequenz f, die Amplitude p0, die Pulsdauer t0 sowie der Druck-Offset p1, die unabhängig voneinander variiert werden können, um das Ergebnis des Aufschäumvorgangs zu optimieren, wobei diese Parameter zweckmäßig auch noch während des laufenden Betriebs der Vorrichtung in Abhängigkeit vom aktuellen Verlauf des Aufschäumvorgangs durch den Benutzer verändert werden können. Die Darstellungen des zeitlichen Druckverlaufs p(t) der Druckpulse ist in Fig. 5 insofern schematisch und idealisiert, als die realen Anstiegs- und Abfallraten eines Druckpulses p begrenzt sind und ein Druckpuls p somit nicht streng rechteckförmig sein kann.

Das Messsignal des Temperatursensors 8 dient als Kriterium für die Beendigung des Aufschäumvorgangs. Durch die Zufuhr von Dampf erwärmt sich die Flüssigkeit 10. Daher wird bei Erreichen einer vorbestimmten Temperaturschwelle der Aufschäumvorgang beendet. Im Fall von Milch als Flüssigkeit 10 ist dies deshalb zweckmäßig, weil ab einer bestimmten Temperatur wegen einer Gerinnung der Milcheiweiße keine weitere Schaumbildung mehr erfolgt. In diesem Fall werden durch die Steuereinrichtung 9 sowohl das Magnetventil 2b, als auch das Dampfventil 7 gleichzeitig geschlossen, sobald von dem Temperatursensor 8 die vorgegebene Temperaturschwelle erfasst wird.

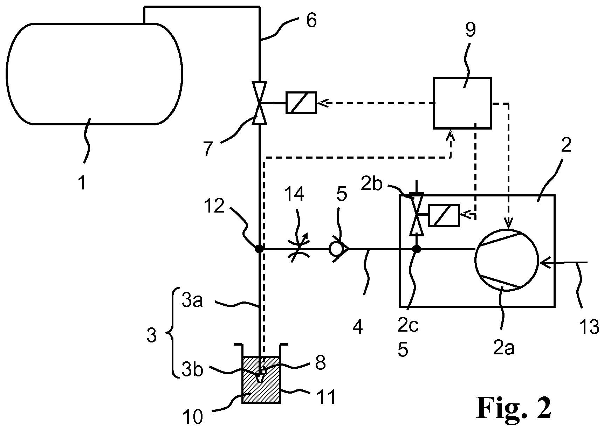

Ein zweite Ausführungsform der Erfindung, die in Fig. 2 dargestellt ist, unterscheidet sich von der ersten Ausführungsform der Figur 1 dadurch, dass das Schaltventil (Magnetventil 2b) nicht seriell am Ausgang der Druckgasquelle 2 zwischen dem Kompressor 2a und der Druckgasleitung 4 eingebaut ist, sondern am Ausgang der Druckgasquelle 2 zwischen dem Kompressor 2a und der Druckgasleitung 4 eine Leitungsverzweigung 2c vorgesehen ist, mit welcher ein Anschluss des Schaltventils (Magnetventil 2b) verbunden ist. Der andere Anschluss des Schaltventils (Magnetventil 2b) führt in die Umgebung. Ansonsten besteht im Aufbau der Vorrichtung kein Unterschied zu der ersten Ausführungsform, weshalb die Elemente der Vorrichtung in Fig. 2 mit den gleichen Bezugszahlen wie in Fig. 1 gekennzeichnet sind.

Während bei der ersten Ausführungsform nach Fig. 1 ein Schließen des Schaltventils (Magnetventil 2b) zu einem Druckabfall in der Druckgasleitung 4 führt, das Schaltventil (Magnetventil 2b) also während eines Druckpulses p offen und in der Pause zwischen zwei Druckpulsen p geschlossen ist, ist dies bei der dritten Ausführungsform genau umgekehrt, da die Leitungsverzweigung 2c durch das offene Schaltventil (Magnetventil 2b) unmittelbar mit der Umgebung verbunden wird, was einen Druckabfall in der Druckgasleitung 4 zur Folge hat. Das Schaltventil (Magnetventil 2b) muss also bei der zweiten Ausführungsform von der Steuereinrichtung 9 umgekehrt angesteuert werden.

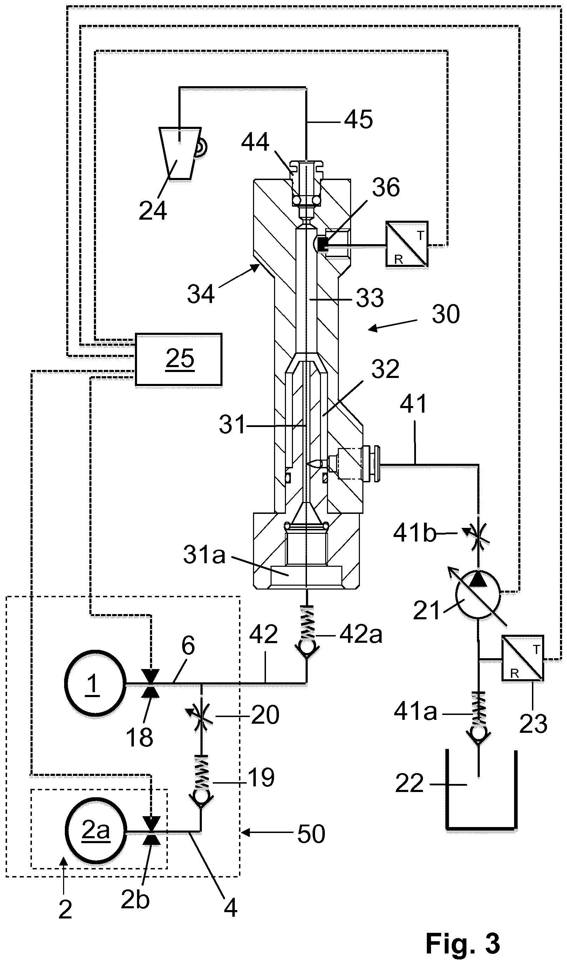

In Figur 3 ist eine dritte Ausführungsform der Erfindung gezeigt, in der das Fördermittel zur Überführung des Dampf-/Gasgemischs in die Flüssigkeit als Erhitzereinheit 30 ausgebildet ist, in der ein Dampf-/Gasgemisch, insbesondere ein Dampf-/Luftgemisch, erzeugt wird und der die zu erhitzende und aufzuschäumende Flüssigkeit zugeführt wird, um in der Erhitzereinheit 30 das Dampf-/Gasgemisch in die Flüssigkeit einzuleiten.

Die in Figur 5 im Detail gezeigte Erhitzereinheit 30 umfasst einen Reaktorblock 34 aus Kunststoff, insbesondere PEEK, PSU oder PEI, der im Wesentlichen die Form eines Zylinders mit einer Mittellängsachse A aufweist. In dem Reaktorblock 34 sind ein innerer Dampfkanal 31, ein den inneren Dampfkanal entlang seiner gesamten Länge koaxial umgebender äußerer Ringkanal 32 und ein koaxial zum Dampfkanal 31 angeordneter Ablaufkanal 33 ausgeformt. Der Dampfkanal 31 weist ein stromaufwärtiges Ende 31a auf, welches durch eine stirnseitige Öffnung 34a in dem Reaktorblock 34 gebildet ist. Weiterhin weist der innere Dampfkanal 31 ein stromabwärtiges Ende 31b auf, welches in den sich koaxial an den Dampfkanal 31 in stromabwärtiger Richtung fortsetzenden Ablaufkanal 33 mündet. Der Ablaufkanal 33 endet an einer stirnseitigen Öffnung 34b in dem Reaktorblock 34. Der Durchmesser des Ablaufkanals 33 ist dabei größer als der Durchmesser des Dampfkanals 31, bspw. doppelt so groß.

Im Bereich des stromaufwärtigen Endes 31a ist in dem Dampfkanal 31 ein Anschlussstutzen 43 angeordnet. Über diesen Anschlussstutzen 43 kann der innere Dampfkanal 31 mit einer in Figuren 5 nicht dargestellten Dampfzufuhrleitung 6 zur Einleitung eines Dampf-Luftgemisches verbunden werden. Am stromabwärtigen Ende des Ablaufkanals 33 ist ein weiterer Anschlussstutzen 44 zum Anschluss einer Ablaufleitung 45 vorgesehen.

Der den inneren Dampfkanal 31 koaxial umgebende äußere Ringkanal 32 weist ebenfalls ein stromaufwärtiges Ende 32a und ein stromabwärtiges Ende 32b auf. Am stromaufwärtigen Ende 32a ist der äußere Ringkanal 32 mit einer Radialbohrung 35 in dem Reaktorblock 34 verbunden (wie in Figur 5 gezeigt). Wie aus Figur 5 ersichtlich, mündet die Radialbohrung 35 an dessen stromaufwärtigem Ende 32a tangential in den Ringkanal 32. In der Radialbohrung 35 ist ein weiterer Anschlussstutzen 46 angeordnet. Über diesen Anschlussstutzen 46 kann die Radialbohrung 35 mit einer (in Figur 5 nicht gezeigten) Zufuhrleitung für eine zu erhitzende und aufzuschäumende Flüssigkeit verbunden werden. Über diese Zufuhrleitung kann bspw. (kalte) Milch in die Radialbohrung 35 und von dort in den äußeren Ringkanal 32 eingeleitet werden, welche in der Erhitzereinheit 30 erhitzt und aufgeschäumt werden soll. Nachfolgend wird davon ausgegangen, dass es sich bei der zu erhitzenden und aufzuschäumenden Flüssigkeit um Milch handelt.

Wie aus Figur 5 ersichtlich, weist der äußere Ringkanal 32 im Bereich seines stromabwärtigen Endes 32b einen konischen Abschnitt 32c auf. In diesem konischen Abschnitt 32c reduziert sich der Außendurchmesser des Ringkanals 32 in konischer Form - bei gleichbleibendem Kanaldruchmesser - auf den Durchmesser D des Ablaufkanals 33. Das stromabwärtige Ende 32b des äußeren Ringkanals 32, an dem der konische Abschnitt 32c einen Außendurchmesser aufweist, der dem Durchmesser D des Ablaufkanals 33 entspricht, mündet der Ringkanal 32 in den Ablaufkanal 33. Im Mündungsbereich, in dem sowohl der innere Dampfkanal 31 als auch der äußere Ringkanal 32 in den Ablaufkanal 33 münden, erfolgt eine Vermischung des durch den Dampfkanal 31 zugeführten Dampf-Luftgemischs mit der durch den äußeren Ringkanal 32 zugeführten Milch. Durch die Vermischung des heißen Dampf-Luftgemisches mit der Milch wird die Milch erhitzt und zu einem Milchschaum aufgeschäumt.

Zur Erfassung der Temperatur der erhitzten oder aufgeschäumten Milch ist im stromabwärtigen Bereich des Ablaufkanals 33 zweckmäßig ein Temperatursensor 36 vorgesehen. Der Temperatursensor 36 ist in einer in den Ablaufkanal 33 mündenden Radialbohrung 47 angeordnet.

In der in Figur 3 gezeigten Vorrichtung mit der oben beschriebenen Erhitzereinheit 30 ist das stromaufwärtige Ende 31a des Dampfkanals 31 Erhitzereinheit 30 mit einer Zufuhrleitung 42 verbunden. Die Zufuhrleitung 42, in der zweckmäßig ein Rückschlagventil 42a angeordnet ist, verbindet die Erhitzereinheit 30 mit einer Einrichtung 50 zur Erzeugung eines Dampf-Luftgemischs. Die Einrichtung 50 zur Erzeugung des Dampf-Luftgemischs umfasst einen Dampferzeuger 1 und eine Druckgasquelle 2 mit einem Kompressor 2a und einem Schaltventil 2b. Der Dampferzeuger 1 ist dabei über eine Dampfleitung 6 mit der Zufuhrleitung 42 verbunden und die Druckgasquelle 2 ist über eine Druckgasleitung 4 mit der Zufuhrleitung 42 verbunden. Die Druckgasquelle 2 umfasst ein in der Druckgasleitung 4 angeordnetes und bevorzugt elektrisch steuerbares Schaltventil 2b (bspw. ein Magnetventil). In der Druckgasleitung 4 sind weiterhin ein Rückschlagventil 19 und ein regelbares Drosselventil 20 vorgesehen. In der Dampfleitung 6 ist ebenfalls ein elektrisch steuerbares Schaltventil (bspw. ein Magnetventil) 18 angeordnet.

Das stromaufwärtige Ende 32a des Ringkanals 32 der Erhitzereinheit 30 ist in der Vorrichtung von Figur 3 mit einer Milchleitung 41 verbunden. Ein freies Ende der Milchleitung 41 ist als Tauchrohr ausgebildet und in einem Behälter 22 mit kalter Milch eingetaucht. In der Milchleitung 41 ist ein Rückschlagventil 41a, eine Pumpe 21 und ein regelbares Drosselventil 41b vorgesehen. Mittels der Pumpe 21 kann kalte Milch aus dem Behälter 22 über das Tauchrohr in die Milchleitung 41 angesaugt und von dort in den Ringkanal 32 der Erhitzereinheit 30 gefördert werden. Zur Erfassung der Temperatur der angesaugten Milch ist in der Milchleitung 41 zweckmäßig ein Temperatursensor 23 vorgesehen.

An das stromabwärtige Ende des Ablaufkanals 33 der Erhitzereinheit 30 ist eine Ablaufleitung 45 angeschlossen. Ein freies Ende der Ablaufleitung 45 mündet in ein Gefäß 24. Das in der Erhitzereinheit 30 erzeugte Schaumprodukt, bei dem es sich in dem Ausführungsbeispiel der Figur 3 um Milchschaum handelt, wird über die Ablaufleitung 45 in das Gefäß 24 gefördert.

Zur Steuerung der Vorrichtung von Figur 3 ist eine Steuereinheit 25 vorgesehen. Die Steuereinheit 25 ist mit den Temperatursensoren 36 und 23 gekoppelt, mit denen die Temperatur der kalten Milch bzw. des erzeugten Schaumprodukts (erhitzter Milchschaum) erfasst werden. Weiterhin ist die Steuereinheit 25 zur Steuerung der Ventile 18 und 2b in der Dampfleitung 6 bzw. der Druckgasleitung 4 eingerichtet, um diese Schaltventile zu öffnen und zu schließen. Die Steuereinheit 25 dient weiterhin zur Steuerung der Pumpe 21 in der Milchleitung 41.

In dem Ausführungsbeispiel der in Figur 3 gezeigten Vorrichtung fördert die Druckgasquelle 2 Druckpulse von komprimiertem Gas über die Druckgasleitung 4 in die Erhitzereinheit 30, wobei die Druckpulse von dem Schaltventil 2b erzeugt werden. Die Druckgasquelle 2 umfasst hierfür den Kompressor 19, der ein Gas, insbesondere Luft, zu einem Druckgas (Druckluft) komprimiert und in die Druckgasleitung 4 einleitet. Wie in den Ausführungsbeispielen der Erfindung der Figuren 1 und 2 ist die Druckgasquelle 2 dabei so eingerichtet, dass das Schaltventil 2a abwechselnd (bevorzugt periodisch mit einer vorgebbaren Frequenz) geöffnet und geschlossen wird, um dadurch Druckpulse des komprimierten Gases zu erzeugen, welche über die Druckgasleitung 4 in die Zufuhrleitung 12 eingeleitet werden können. Zweckmäßig ist das Schaltventil 2b der Druckgasquelle 2 von der Steuereinheit 25 pulsweitenmoduliert ansteuerbar.

Die Druckpulse der Druckgasquelle 2 werden bevorzugt periodisch mit einer einstellbaren Frequenz über die Druckgasleitung 4 und durch das regelbare Drosselventil 20 in die Zufuhrleitung 42 eingeleitet. In der Zufuhrleitung 42 vermischen sich die Pulse des Druckgases (insbesondere Druckluft) mit dem von der Dampfquelle 1 über die Dampfleitung 6 in die Zufuhrleitung 12 eingeleiteten heißen Dampf und erzeugen in der Zufuhrleitung 12 ein gepulstes Dampf-Luftgemisch. Das gepulste Dampf-Luftgemisch wird über die Zuführleitung 12 in den inneren Dampfkanal 31 der Erhitzereinheit 30 eingeleitet und strömt von dort in den Ablaufkanal 33. In dem Ablaufkanal 33 vermischen sich die Pulse des Dampf-Luftgemischs mit der über den äußeren Ringkanal 32 in die Erhitzereinheit 30 eingeleiteten kalten Milch, wodurch die Milch erhitzt und zu einem Milchschaum aufgeschäumt wird. Das so erzeugte Schaumprodukt (Milchschaum) wird über den Ablaufkanal 33 in die Ablaufleitung 45 und von dort in das Gefäß 24 gefördert.

Durch Einstellung der Parameter der von der Druckgasquelle 2 erzeugten Druckpulse, wie deren Frequenz f und Amplitude p0, kann die Zusammensetzung des in der Erhitzereinheit 30 erzeugten Milchschaums beeinflusst und eingestellt werden. Zur Einstellung gewünschter Werte der Frequenz f und der Amplitude p0 der Druckpulse verfügt die Steuereinheit 25 über Einstellmittel, beispielsweise einen Drehregler oder Druckknöpfe, mit denen die Frequenz und/oder die Amplitude der Druckpulse zweckmäßig stufenlos zwischen einem Minimalwert und einem Maximalwert einstellbar ist. Die Amplitude der Druckpulse kann über die Stellung des regelbaren Drosselventils 20 geregelt werden. Die Periode bzw. Frequenz f der Druckpulse kann über die Ansteuerung des Schaltventils 2b eingestellt werden.

Die Erfindung ist nicht auf die hier zeichnerisch dargestellten Ausführungsbeispiele beschränkt. So kann bspw. alternativ zu Umgebungsluft auch ein anderes Gas, beispielsweise ein inertes Gas wie Stickstoff, verwendet werden, falls die oxidierende Wirkung des Sauerstoffgehalts von Luft einen Störeffekt für die Schaumbildung oder für die Eigenschaften des fertigen Schaums darstellen würde. Je nach Art der aufzuschäumenden Flüssigkeit kommt auch Kohlendioxid als Gas in Betracht. In einem solchen Fall entfällt die Notwendigkeit, einen Kompressor 2a einzusetzen, da technische Gase in Druckbehältern unter hohem Druck bevorratet werden. Stattdessen ist dann ein Druckminderer zur Reduzierung des Gasdrucks von dem im Vorratsbehälter herrschenden Wert auf den in der Druckgasleitung 4 benötigten Wert, d.h. auf die gewünschte Amplitude p0 der Druckpulse p, vorzusehen. Folglich ist zur Erzeugung von Druckpulsen p der Einsatz eines steuerbaren Magnetventils 2b wie bei der ersten und dritten Ausführungsform nach Fig. 1 bzw. 3 erforderlich, um die Druckpulse zu erzeugen.

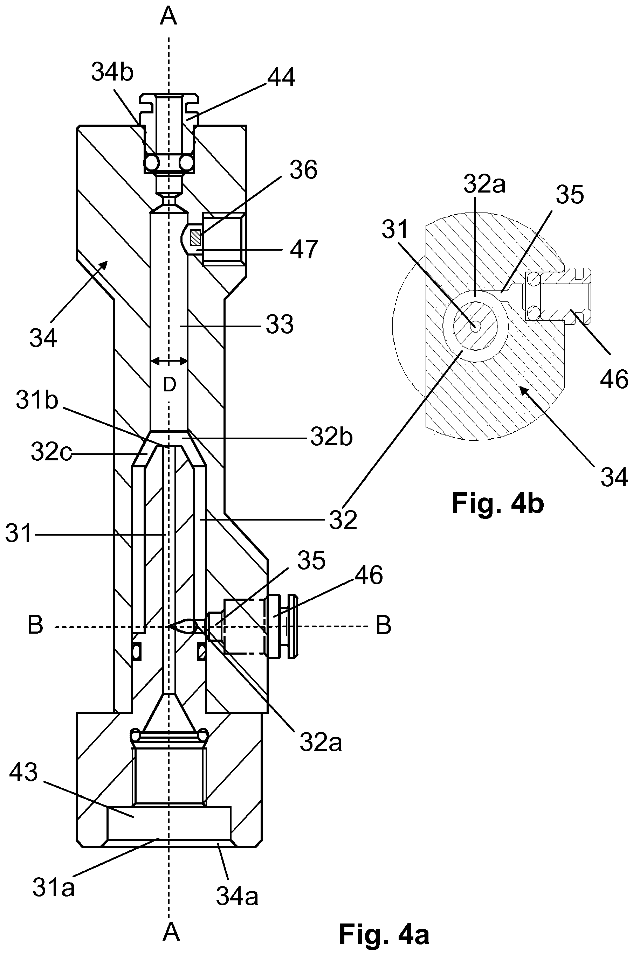

Weiterhin kann der zeitliche Verlauf der Druckpulse auch anders gewählt werden als in Figur 4 gezeigt. So ist es beispielsweise möglich, die Druckpulse p nicht periodisch mit einer fest vorgegebenen Frequenz f sondern aperiodisch auszugeben. Weiterhin kann die Pulsdauer t0 und der zeitliche Abstand der aufeinanderfolgenden Druckpulse p beliebig gewählt werden. Auch der zeitliche Verlauf der Amplitude p0 muss nicht, wie in Figur 4 gezeigt, konstant sein, sondern kann während eines Aufschäumvorgangs geändert werden, bspw. durch eine Regelung des Drosselventils 14 mit regelbarem Strömungswiderstand.

## Patentansprüche

1. Vorrichtung zum Erhitzen und Aufschäumen einer Flüssigkeit, insbesondere eines Getränks, umfassend einen Dampferzeuger (1), eine Druckgasquelle (2) mit einem Kompressor (2a), ein mit dem Dampferzeuger (1) und der Druckgasquelle (2) in Verbindung stehendes Fördermittel (3, 30) zur Überführung eines Dampf-/Gasgemischs in die Flüssigkeit und eine Steuereinrichtung (9), wobei die Druckgasquelle (2) ein Druckgas in eine mit dem Fördermittel (3, 30) in Verbindung stehende Druckgasleitung (4) fördert, in der ein steuerbares Schaltventil (2b) angeordnet ist, welches mit der Steuereinrichtung (9) gekoppelt ist, **dadurch gekennzeichnet, dass** der Kompressor (2a) permanent unter Druck stehendes Druckgas erzeugt und in die Druckgasleitung (4) fördert und dass die Steuereinrichtung (9) das steuerbare Schaltventil (2b) so ansteuert, dass Druckpulse (p) des Druckgases erzeugt werden, wobei der dabei erzeugte Druckverlauf (p(t)) des Druckgases einen Druckoffset (p1) aufweist, so dass zeitlich zwischen den Druckpulsen (p) Druckgas mit einem dem Druckoffset (p1) entsprechenden Druck in das Fördermittel (3) eingeleitet wird.

2. Vorrichtung nach Anspruch 1, **dadurch gekennzeichnet, dass** die Druckgasquelle (2) einen Kompressor (2a) umfasst, insbesondere einen Hubkolbenverdichter.

3. Vorrichtung nach Anspruch 1 oder 2, **dadurch gekennzeichnet, dass** das Schaltventil (2b) als pulsweitenmoduliert angesteuertes Magnetventil ausgebildet ist.

4. Vorrichtung nach Anspruch 3, **dadurch gekennzeichnet, dass** das Schaltventil (2b) entweder seriell zum Kompressor (2a) am Ausgang der Druckgasquelle (2) angeordnet ist oder von einer am Ausgang der Druckgasquelle (2) vorgesehenen Leitungsverzweigung (2c) aus in die Umgebung führt.

5. Vorrichtung nach einem der voranstehenden Ansprüche, **dadurch gekennzeichnet, dass** die Druckgasquelle (2) die Druckpulse (p) in einer einstellbaren Pulsfrequenz (f) ausgibt.

6. Vorrichtung nach einem der voranstehenden Ansprüche, **dadurch gekennzeichnet, dass** die Pulsfrequenz (f) der Druckpulse im Bereich von 0,1 bis 200 Hz und insbesondere zwischen 1 und 50 Hz liegt.

7. Vorrichtung nach einem der voranstehenden Ansprüche, **dadurch gekennzeichnet, dass** die Pulsfrequenz (f) und/oder die Pulsdauer (t0) und/oder die Amplitude (p0) der von der Druckgasquelle (2) erzeugten Druckpulse (p) einstellbar ist.

8. Vorrichtung nach einem der voranstehenden Ansprüche, **dadurch gekennzeichnet, dass** das Fördermittel (3) über eine Dampfleitung (6) mit dem Dampferzeuger (1) in Verbindung steht oder dass das Fördermittel (3) über eine Zufuhrleitung (42) mit einer Einrichtung (50) zur Erzeugung eines Dampf-Luftgemischs in Verbindung steht.

9. Vorrichtung nach Anspruch 1 oder 8, **dadurch gekennzeichnet, dass** in der Druckgasleitung (4) ein Rückschlagventil (5) und/oder ein Drosselventil (14, 20) mit festem oder regelbarem Strömungswiderstand angeordnet ist oder dass in der Zufuhrleitung (42) ein Rückschlagventil (42a) und/oder ein Drosselventil (20) mit festem oder regelbarem Strömungswiderstand angeordnet ist.

10. Vorrichtung nach einem der Ansprüche 8 oder 9, **dadurch gekennzeichnet, dass** in der Dampfleitung (6) ein Dampfventil (7) angeordnet ist.

11. Vorrichtung nach dem voranstehenden Anspruch, **dadurch gekennzeichnet, dass** die Steuereinrichtung (9), mit dem Dampferzeuger (1) oder dem Dampfventil (7) gekoppelt ist.

12. Vorrichtung nach einem der voranstehenden Ansprüche, **dadurch gekennzeichnet, dass** das Fördermittel (3, 30) zur Überführung eines Dampf-/Gasgemischs in die Flüssigkeit durch eine Erhitzereinheit (30) gebildet ist, der ein gepulstes Dampf-Gasgemisch sowie die zu erhitzende und aufzuschäumende Flüssigkeit zugeführt wird und welche die Pulse des Dampf-Gasgemischs in die Flüssigkeit einleitet.

13. Vorrichtung nach Anspruch 12, wobei die Erhitzereinheit (30) einen inneren Dampfkanal (31) und einen ihn koaxial umgebenden äußeren Ringkanal (32) für die aufzuschäumende Flüssigkeit aufweist, wobei an einem stromaufwärtigen Ende (31a) des Dampfkanals (31) ein Dampf-Luftgemisch und an einem stromaufwärtigen Ende (32a) des Ringkanals (32) die Flüssigkeit zugeführt wird und der Dampfkanal (31) und der Ringkanal (32) jeweils an ihrem stromabwärtigen Ende (31b, 32b) in einen Ablaufkanal (33) zur Abführung der erhitzten und aufgeschäumten Flüssigkeit münden.

14. Vorrichtung nach einem der Ansprüche 12 oder 13, **dadurch gekennzeichnet, dass** der Dampfkanal (31), der Ringkanal (32) und der Ablaufkanal (33) in einem Reaktorblock (34) aus Kunststoff ausgeformt sind, wobei der Dampfkanal (31) in axialer Richtung in dem Reaktorblock (34) verläuft und das stromaufwärtige Ende (31a) des Dampfkanals (31) mit einer Zufuhrleitung (42) verbunden ist, über die ein Dampf-Luftgemisch in den Dampfkanal (31) vertikal entgegen der Schwerkraft von unten nach oben zum stromabwärtigen Ende (31b) des Dampfkanals (31) eingeleitet wird.

15. Verfahren zum Erhitzen und Aufschäumen einer Flüssigkeit, insbesondere eines Getränks, in dem mit einem Fördermittel (3) ein Dampf-/Gasgemisch in die Flüssigkeit eingeleitet wird, wobei dem Fördermittel (3, 30) zur Erzeugung des Dampf-/Gasgemischs Dampf und ein komprimiertes Gas zugeführt wird, welches von einer Druckgasquelle (2) mit einem Kompressor (2a) erzeugt wird, **dadurch gekennzeichnet, dass** die Druckgasquelle (2) ein permanent unter Druck stehendes Druckgas in eine mit dem Fördermittel (3, 30) in Verbindung stehende Druckgasleitung (4) fördert, und dass in der Druckgasleitung (4) ein steuerbares Schaltventil (2b) angeordnet ist, welches aus dem von der Druckgasquelle (2) bereitgestellten Druckgas Druckpulse (p) erzeugt und diese periodisch in das Fördermittel (3) einleitet, wobei der dabei erzeugte Druckverlauf (p(t)) des Druckgases einen Druckoffset (p1) aufweist, so dass zeitlich zwischen den Druckpulsen (p) Druckgas mit einem dem Druckoffset (p1) entsprechenden Druck in das Fördermittel (3, 30) eingeleitet wird.

## Claims

1. Device for heating and foaming a liquid, in particular a beverage, comprising a steam generator (1), a compressed gas source (2) with a compressor (2a), a conveying means (3, 30) connected to the steam generator (1) and the compressed gas source (2) for transferring a steam/gas mixture into the liquid and a control device (9), wherein the compressed gas source (2) conveys a compressed gas into a compressed gas pipe (4) connected to the conveying means (3, 30) and in which is arranged a controllable on-off valve (2b) which is coupled to the control device (9), **characterised in that** the compressor (2a) generates compressed gas permanently under pressure and conveys it into the compressed gas pipe (4) and **in that** the control device (9) actuates the controllable on-off valve (2b) so that pressure pulses (p) of the compressed gas are generated, wherein the thus generated pressure course (p(t)) of the compressed gas has a pressure offset (p1) so that in time between the pressure pulses (p), compressed gas at a pressure corresponding to the pressure offset (p1) is introduced into the conveying means (3).

2. Device according to claim 1, **characterised in that** the compressed gas source (2) includes a compressor (2a), in particular a piston compressor.

3. Device according to claim 1 or 2, **characterised in that** the on-off valve (2b) is designed as a solenoid valve actuated by pulse-width modulation.

4. Device according to claim 3, **characterised in that** the on-off valve (2b) is arranged either in series with the compressor (2a) at the output of the compressed gas source (2) or leads out into the surroundings from a pipe branch (2c) provided at the output of the compressed gas source (2).

5. Device according to one of the preceding claims, **characterised in that** the compressed gas source (2) emits the pressure pulses (p) at an adjustable pulse frequency (f).

6. Device according to one of the preceding claims, **characterised in that** the pulse frequency (f) of the pressure pulses lies in the range from 0.1 to 200 Hz and in particular between 1 and 50 Hz.

7. Device according to one of the preceding claims, **characterised in that** the pulse frequency (f) and/or the pulse duration (t0) and/or the amplitude (p0) of the pressure pulses (p) generated by the compressed gas source (2) are adjustable.

8. Device according to one of the preceding claims, **characterised in that** the conveying means (3) is connected to the steam generator (1) via a steam pipe (6) or **in that** the conveying means (3) is connected to a device (50) for generating a steam-air mixture via a supply pipe (42).

9. Device according to claim 1 or 8, **characterised in that** a non-return valve (5) and/or a flow control valve (14, 20) with fixed or regulatable flow resistance is arranged in the compressed gas pipe (4) or **in that** a non-return valve (42a) and/or a flow control valve (20) with fixed or regulatable flow resistance is arranged in the supply pipe (42).

10. Device according to one of claims 8 or 9, **characterised in that** a steam valve (7) is arranged in the steam pipe (6).

11. Device according to the preceding claim, **characterised in that** the control device (9) is coupled to the steam generator (1) or the steam valve (7).

12. Device according to one of the preceding claims, **characterised in that** the conveying means (3, 30) for transferring a steam/gas mixture into the liquid is formed by a heater unit (30) to which a pulsed steam-gas mixture and the liquid to be heated and to be foamed is supplied and which introduces the pulses of the steam-gas mixture into the liquid.

13. Device according to claim 12, wherein the heater unit (30) has an inner steam channel (31) and an outer annular channel (32) surrounding it coaxially for the liquid to be foamed, wherein a steam-air mixture is supplied at an upstream end (31a) of the steam channel (31) and the liquid is supplied at an upstream end (32a) of the annular channel (32) and the steam channel (31) and the annular channel (32) open out respectively at their downstream end (31b, 32b) into a discharge channel (33) to remove the heated and foamed liquid.

14. Device according to one of claims 12 or 13, **characterised in that** the steam channel (31), the annular channel (32) and the discharge channel (33) are formed in a reactor block (34) made of plastic, wherein the steam channel (31) runs in axial direction in the reactor block (34) and the upstream end (31a) of the steam channel (31) is connected to a supply pipe (42), via which a steam-air mixture is introduced into the steam channel (31) vertically counter to the gravitational force from bottom to top towards the downstream end (31b) of the steam channel (31).

15. Method for heating and foaming a liquid, in particular a beverage, in which a steam/gas mixture is introduced into the liquid with a conveying means (3), wherein steam and a compressed gas, which is generated by a compressed gas source (2) with a compressor (2a), is supplied to the conveying means (3, 30) to generate the steam/gas mixture, **characterised in that** the compressed gas source (2) conveys a compressed gas permanently under pressure into a compressed gas pipe (4) connected to the conveying means (3, 30), and **in that** a controllable on-off valve (2b), which generates pressure pulses (p) from the compressed gas provided by the compressed gas source (2) and introduces them periodically into the conveying means (3), is arranged in the compressed gas pipe (4), wherein the thus generated pressure course (p(t)) of the compressed gas has a pressure offset (p1) so that in time between the pressure pulses (p), compressed gas at a pressure corresponding to the pressure offset (p1) is introduced into the conveying means (3, 30).

## Revendications

1. Dispositif de chauffage et de moussage d'un liquide, en particulier d'une boisson, comprenant un générateur de vapeur (1), une source de gaz comprimé (2) avec un compresseur (2a), un moyen de transport (3, 30) relié au générateur de vapeur (1) et à la source de gaz comprimé (2), pour transférer un mélange de vapeur-gaz dans le liquide et un système de commande (9), dans lequel la source de gaz comprimé (2) transporte un gaz comprimé dans un conduit de gaz comprimé (4) relié au moyen de transport (3, 30), dans lequel est disposée une soupape de commutation (2b) pouvant être commandée, laquelle est couplée au système de commande (9), **caractérisé en ce que** le compresseur (2a) génère en permanence un gaz comprimé sous pression et le transporte dans le conduit de gaz comprimé (4), et que le système de commande (9) pilote la soupape de commutation (2b) pouvant être commandée de telle sorte que des impulsions de pression (p) du gaz comprimé sont générées, dans lequel l'évolution de pression ((p(t)) générée ce faisant du gaz comprimé présente un décalage de pression (p1) de sorte que du gaz comprimé avec une pression correspondant au décalage de pression (p1) est introduit dans le moyen de transport (3) dans le temps entre les impulsions de pression (p).

2. Dispositif selon la revendication 1, **caractérisé en ce que** la source de gaz comprimé (2) comprend un compresseur (2a), en particulier un compresseur à piston alternatif.

3. Dispositif selon la revendication 1 ou 2, **caractérisé en ce que** la soupape de commutation (2b) est réalisée en tant qu'électrovanne pilotée par modulation en largeur d'impulsion.

4. Dispositif selon la revendication 3, **caractérisé en ce que** la soupape de commutation (2b) est disposée soit en série par rapport au compresseur (2a) au niveau de la sortie de la source de gaz comprimé (2) soit mène depuis une bifurcation de conduit (2c) prévue au niveau de la sortie de la source de gaz comprimé (2) dans l'environnement extérieur.

5. Dispositif selon l'une quelconque des revendications précédentes, **caractérisé en ce que** la source de gaz comprimé (2) envoie les impulsions de pression (p) en une fréquence d'impulsion (f) réglable.

6. Dispositif selon l'une quelconque des revendications précédentes, **caractérisé en ce que** la fréquence d'impulsion (f) des impulsions de pression se situe dans la plage de 0,1 à 200 Hz et en particulier entre 1 et 50 Hz.

7. Dispositif selon l'une quelconque des revendications précédentes, **caractérisé en ce que** la fréquence d'impulsion (f) et/ou la durée d'impulsion (t0) et/ou l'amplitude (p0) des impulsions de pression (p) générées par la source de gaz comprimé (2) sont réglables.

8. Dispositif selon l'une quelconque des revendications précédentes, **caractérisé en ce que** le moyen de transport (3) est relié par l'intermédiaire d'un conduit de vapeur (6) au générateur de vapeur (1), ou que le moyen de transport (3) est relié par l'intermédiaire d'un conduit d'arrivée (42) à un système (50) pour générer un mélange de vapeur-air.

9. Dispositif selon la revendication 1 ou 8, **caractérisé en ce qu'**une soupape anti-retour (5) et/ou une soupape d'étranglement (14, 20) avec une résistance à l'écoulement fixe ou régulable sont disposées dans le conduit de gaz comprimé (4), ou qu'une soupape anti-retour (42a) et/ou une soupape d'étranglement (20) avec une résistance à l'écoulement fixe ou régulable sont disposées dans le conduit d'arrivée (42).

10. Dispositif selon l'une quelconque des revendications 8 ou 9, **caractérisé en ce qu'**une soupape de vapeur (7) est disposée dans le conduit de vapeur (6) .

11. Dispositif selon la revendication précédente, **caractérisé en ce que** le système de commande (9) est couplé au générateur de vapeur (1) ou à la soupape de vapeur (7).

12. Dispositif selon l'une quelconque des revendications précédentes, **caractérisé en ce que** le moyen de transport (3, 30) est formé par une unité de chauffage (30) aux fins du transfert d'un mélange de vapeur-air dans le liquide, à laquelle sont amenés un mélange de vapeur-gaz puisé ainsi que le liquide à chauffer et à mousser et laquelle introduit les impulsions du mélange de vapeur-gaz dans le liquide.

13. Dispositif selon la revendication 12, dans lequel l'unité de chauffage (30) présente un canal de vapeur (31) intérieur et un canal annulaire (32) extérieur l'entourant de manière coaxiale pour le liquide à mousser, dans lequel un mélange de vapeur-gaz est amené au niveau d'une extrémité en amont (31a) du canal de vapeur (31) et le liquide est amené au niveau d'une extrémité côté aval (32a) du canal annulaire (32), et le canal de vapeur (31) et le canal annulaire (32) débouchent respectivement au niveau de leur extrémité en aval (31b, 32b) dans un canal d'évacuation (33) pour évacuer le liquide chauffé et moussé.

14. Dispositif selon l'une quelconque des revendications 12 ou 13, **caractérisé en ce que** le canal de vapeur (31), le canal annulaire (32) et le canal d'évacuation (33) sont formés dans un bloc réacteur (34) en matière plastique, dans lequel le canal de vapeur (31) s'étend dans une direction axiale dans le bloc réacteur (34) et l'extrémité en amont (31a) du canal de vapeur (31) est reliée à un conduit d'arrivée (42), par l'intermédiaire duquel un mélange de vapeur-air est introduit dans le canal de vapeur (31) de manière verticale à l'encontre de la force de gravité depuis le bas vers le haut en direction de l'extrémité en aval (31b) du canal de vapeur (31).

15. Procédé de chauffage et de moussage d'un liquide, en particulier d'une boisson, dans lequel un mélange de vapeur/gaz est introduit dans le liquide avec un moyen de transport (3), dans lequel sont amenés au moyen de transport (3, 30) pour générer le mélange de vapeur- gaz de la vapeur et un gaz comprimé, lequel est généré par une source de gaz comprimé (2) avec un compresseur (2a), **caractérisé en ce que** la source de gaz comprimé (2) transporte un gaz comprimé sous pression en permanence dans un conduit de gaz comprimé (4) relié au moyen de transport (3, 30), et qu'est disposée dans le conduit de gaz comprimé (4) une soupape de commutation (2b) pouvant être commandée, laquelle génère des impulsions de pression (p) à partir du gaz comprimé fourni par la source de gaz comprimé (2) et les introduit de manière périodique dans le moyen de transport (3), dans lequel l'évolution de pression (p(t)) ainsi générée du gaz comprimé présente un décalage de pression (p1) de sorte que du gaz comprimé avec une pression correspondant au décalage de pression (p1) est introduit dans le moyen de transport (3, 30) dans le temps entre les impulsions de pression (p).
